# EUROPEAN PATENT APPLICATION

(11) **EP 4 611 087 A1**
(43) Date of publication of application: **03.09.2025**
(21) Application number: 25159053.5
(22) Date of filing: 20.02.2025
(51) Int. Cl.: H01M 10/04, H01M 10/653, H01M 50/242, H01M 50/262, H01M 50/293

(54) **BATTERY MANUFACTURING APPARATUS AND BATTERY MANUFACTURING METHOD USING THE SAME**

(30) Priority: 28.02.2024 KR 20240028929
(71) Applicant: SK On Co., Ltd., Seoul 03161 (KR)
(72) Inventor: HONG, Min Jeong, Daejeon 34124 (KR); KIM, Jae Hun, Daejeon 34124 (KR); OH, Yoon Sung, Daejeon 34124 (KR); LEE, Seung Won, Daejeon 34124 (KR)
(74) Representative: Bird & Bird LLP

(57) **Abstract**

The present disclosure relates to a battery manufacturing apparatus for manufacturing a battery assembly which includes a plurality of battery cells, each including a tab part electrically connected to an outside and protruding outward, and an accommodating bottom surface forming a bottom surface of an accommodating space in which the plurality of battery cells are accommodated, including a sensor configured to sense a profile regarding a degree of protrusion of a coating surface of one side of the battery cell facing the accommodating bottom surface, a discharger configured to discharge an adhesive material to the coating surface of at least one battery cell of the plurality of battery cells, and a controller configured to control the discharger or the sensor to adjust at least one of a position and a moving speed of the discharger based on the profile, and a battery manufacturing method using the battery manufacturing apparatus.

## Description

### BACKGROUND OF THE INVENTION

### 1. Field

Embodiments of the present disclosure relate to a battery manufacturing apparatus and a battery manufacturing method using the same.

### 2. Description of the Related Art

A secondary battery is a battery which converts electrical energy into chemical energy, stores it, and can be reused multiple times through charging and discharging. Secondary batteries are widely used in various industries due to their economical and eco-friendly characteristics. In particular, a lithium secondary battery among the secondary batteries is widely used in various industries, including portable devices which require high-density energy.

The operating principle of the lithium secondary battery is an electrochemical oxidation-reduction reaction. In other words, the principle is that electricity is generated by movement of lithium ions and charging is done through the reverse process. In the case of the lithium secondary battery, the phenomenon of lithium ions in an anode escaping and moving to a cathode through an electrolyte and a separator is called discharge. And the opposite process of this phenomenon is called charging.

A plurality of secondary batteries may be grouped to be used with increased capacity. The plurality of secondary batteries may be accommodated in a case. Here, an adhesive may be applied between the secondary battery and the case in order to stably locate the battery inside the case or to efficiently dissipate heat. Damage to the secondary battery may occur in the process of applying the adhesive or accommodating the secondary battery in the case. Therefore, research on this topic is actively underway.

### SUMMARY OF THE INVENTION

An object to be achieved by the present disclosure is to provide a battery assembly with improved performance.

Further, an object is to provide a battery assembly which prevents defects caused by processing and improves stability of a final product.

In addition, the present disclosure may be widely applied in the field of green technologies such as electric vehicles, battery charging stations, and other solar and wind power generation using batteries.

In addition, the present disclosure may be used for eco-friendly electric vehicles and hybrid vehicles to prevent climate change by suppressing air pollution and greenhouse gas emissions.

A battery manufacturing apparatus of the present disclosure is a battery manufacturing apparatus for manufacturing a battery assembly which includes a plurality of battery cells, each battery cell including a tab part electrically connected to an outside and protruding outward, and an accommodating bottom surface which forms a bottom surface of an accommodating space in which the plurality of battery cells are accommodated, including: a sensor configured to sense a profile regarding a degree of protrusion of a coating surface of one side of the battery cell facing the accommodating bottom surface; a discharger configured to discharge an adhesive material to the coating surface of at least one battery cell of the plurality of battery cells; and a controller configured to control the discharger or the sensor to adjust at least one of a position and a moving speed of the discharger based on the profile.

The sensor may be configured to sense the profile in one or more sensing lines located along a protruding direction of the tab part of at least one battery cell of the plurality of battery cells.

Spacing between the one or more sensing lines may be formed to be equal to each other.

The controller may be configured to obtain each reference point where the discharger is located based on each profile in the one or more sensing lines.

The controller may be configured to obtain a movement path of the discharger through interpolation or extrapolation based on the reference point.

The controller may be configured to obtain coordinates of the reference point along a stacking direction of the plurality of battery cells based on each profile in the one or more sensing lines.

The controller may be configured to obtain the coordinates of the reference point based on an inflection point on the profile.

The discharger may be configured to move along a protruding direction of the tab part and discharge the adhesive material.

The controller may be configured to obtain coordinates of the reference point along the protruding direction of the tab part based on a position of the one or more sensing lines.

The controller may be configured to obtain each of the one or more sensing lines as the coordinates of the reference point along the protruding direction of the tab part.

The controller may be configured to obtain a virtual application area between the battery cell and the accommodating bottom surface based on the profile measured in the one or more sensing lines.

The controller may be configured to control the moving speed of the discharger based on the virtual application area.

The controller may be configured to obtain the moving speed of the discharger through the following Equation 1.V = Q/A (where V refers to the moving speed of the discharger, Q refers to an hourly discharge amount of the discharger, and A refers to the virtual application area on which the adhesive material is applied.)

The moving speed of the discharger may be maintained the same within each section between the one or more sensing lines.

The battery manufacturing apparatus may further include an inspector configured to sense the adhesive material applied by the discharger.

In addition, a battery manufacturing method of the present disclosure is a battery manufacturing method of manufacturing a battery assembly which includes a plurality of battery cells, each battery cell including a tab part electrically connected to an outside and protruding outward, and an accommodating bottom surface which forms a bottom surface of an accommodating space in which the plurality of battery cells are accommodated, including: sensing a profile regarding a degree of protrusion of a coating surface of one side of the battery cell facing the accommodating bottom surface; adjusting at least one of a position and a moving speed of a discharger configured to apply adhesive to the coating surface of the battery cell based on the profile; and applying an adhesive material to the coating surface of at least one battery cell of the plurality of battery cells.

The sensing of the profile may include sensing the profile in each of one or more sensing lines along a protruding direction of the tab part.

The applying of the adhesive material may include discharging the adhesive material by the discharger while the discharger moves.

The battery manufacturing method may further include sensing a distance between the adhesive material applied to the coating surface of the plurality of battery cells and the accommodating bottom surface.

According to an embodiment of the present disclosure, it is possible to provide a stable battery assembly with enhanced performance.

In addition, it is possible to provide a battery assembly which prevents defects caused by processing and improves the stability of the final product.

### BRIEF DESCRIPTION OF THE DRAWINGS

FIG. 1 illustrates a battery cell according to an embodiment of the present disclosure.
FIG. 2 illustrates a battery assembly according to an embodiment of the present disclosure.
FIG. 3 is a schematic diagram illustrating an assembly process of an accommodating case according to an embodiment of the present disclosure.
FIG. 4 is a schematic diagram illustrating a process of applying an adhesive material according to an embodiment of the present disclosure.
FIG. 5 illustrates one or more sensing lines according to an embodiment of the present disclosure.
FIG. 6 illustrates a movement path of a discharger according to an embodiment of the present disclosure.
FIG. 7 illustrates a sensor sensing a profile according to an embodiment of the present disclosure.
FIG. 8 illustrates a profile according to an embodiment of the present disclosure.
FIG. 9 illustrates an adhesive material applied to a battery cell according to an embodiment of the present disclosure.
FIG. 10 illustrates a part of an assembled lower cover according to an embodiment of the present disclosure.
FIG. 11 and FIG. 12 illustrate a discharger applying an adhesive material according to an embodiment of the present disclosure.
FIG. 13 illustrates a battery manufacturing method according to an embodiment of the present disclosure.

### DETAILED DESCRIPTION

Hereinafter, the present disclosure will be described in detail with reference to the accompanying drawings. However, this is merely illustrative and the present disclosure is not limited to specific embodiments described by way of example.

Specific terms used in the specification are merely for convenience of explanation and are not intended to limit the illustrated embodiments.

For example, expressions such as "identical" and "the same" not only indicate a strictly identical state, but also indicate a state in which there is a tolerance or a difference of the degree to which the same function is obtained.

For example, an expression indicating a relative or absolute arrangement such as "in a direction", "along a direction", "parallel", "perpendicular", "centered", "concentric", or "coaxial" not only indicate the exact arrangement, but also indicate a state of relative displacement with tolerance or an angle or distance which provides the same function.

To describe the present disclosure, the following is explained based on a spatial orthogonal coordinate system with an X-axis, a Y-axis, and a Z-axis being orthogonal to each other. Each axis direction (an X-axis direction, a Y-axis direction, or a Z-axis direction) refers to the two directions in which each axis extends.

X, Y, and Z directions mentioned below are provided for the purpose of explanation so that the disclosure can be clearly understood, and it is to be understood that each direction may be defined differently depending on where the reference is placed.

The use of terms such as 'first', 'second', and 'third' before components mentioned below is only intended to avoid confusion regarding the components they refer to, and has nothing to do with the order, importance, or main-subordinate relationship between the components. For example, an invention which includes only a second component without a first component may be implemented.

As used herein, singular expressions include plural expressions unless the context clearly indicates otherwise.

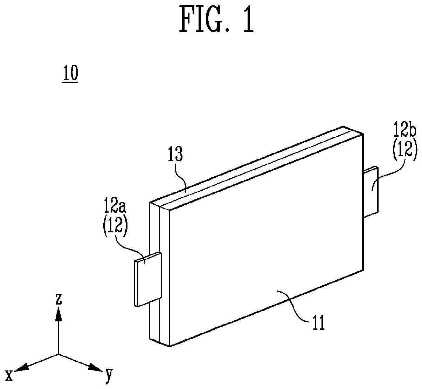

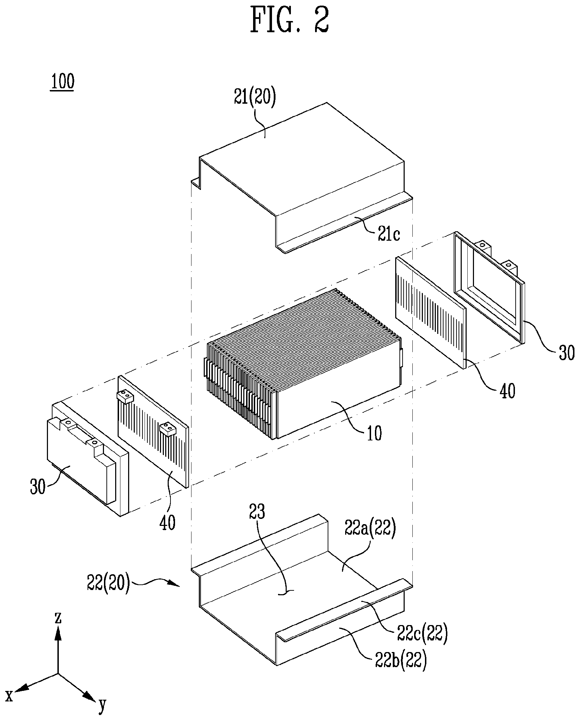

FIG. 1 illustrates a battery cell 10 according to an embodiment of the present disclosure, and FIG. 2 illustrates a battery assembly 100 according to an embodiment of the present disclosure.

The battery cell 10 described in the specification refers to a secondary battery which can be used repeatedly by charging and discharging electrical energy. For example, the battery cell may refer to a lithium secondary battery or a lithium-ion battery, but is not limited thereto. As another example, the battery cell may be a solid-state battery.

The battery cell 10 may be classified into a pouch-type secondary battery, a prismatic secondary battery, or a cylindrical secondary battery according to its shape. Referring to FIG. 1, a pouch-type secondary battery is illustrated as an example in the specification for convenience of explanation, but the present disclosure is not limited thereto.

The battery assembly illustrated in the specification may refer to a battery module or a battery pack. The battery module may refer to one or more battery cells 10 grouped and placed in a case to protect them against external impact, heat, vibration, and the like, and to have high output and high capacity characteristics. The battery pack may refer to a grouping of one or more battery cells 10 or battery modules.

Referring to FIG. 1, the battery cell 10 includes a tab part 12 electrically connected to the outside and protruding outward. In addition, the battery cell 10 may further include a main body 11.

The main body 11 may produce or store electrical energy. The main body 11 may include an electrode assembly (not shown) including a cathode, an anode, and a separator inside for the production and storage of electrical energy. The main body 11 may further include electrolyte in contact with the electrode assembly. The electrolyte may be an electrolyte solution in the form of a liquid.

The main body 11 may further include an exterior case. The exterior case may contain the electrode assembly and the electrolyte inside. The exterior case may be made of a material with high rigidity to protect the electrode assembly and the electrolyte contained inside from impact.

The tab part 12 may electrically connect the main body 11 and the outside. A plurality of the tab parts 12 may be provided. The tab part 12 may include a cathode tab 12a which is connected to a cathode and an anode tab 12b which is connected to an anode.

The tab part 12 may protrude away from both sides of the main body 11. Referring to FIG. 1, the cathode tab 12a and the anode tab 12b may protrude in opposite directions. Without being limited thereto, the cathode tab 12a and the anode tab 12b may be provided side by side on one side of the main body 11.

In the specification, the direction in which the tab part 12 protrudes may refer to a direction parallel to the X-axis direction.

Specifically, FIG. 2 illustrates an exploded view of the battery assembly 100. The battery assembly 100 may include a plurality of the battery cells 10. The plurality of battery cells 10 may be stacked along one direction. For example, the plurality of battery cells may be stacked along the Y-axis.

A connection member (not shown) may be provided between the plurality of battery cells. The plurality of battery cells may be stably connected by the connection member. For example, the connection member may be a double-sided tape.

Further, a pressure pad (not shown) may be provided between the plurality of battery cells. The pressure pad may relieve the surface pressure between the battery cells to prevent damage to the battery cells. For this purpose, the pressure pad may include a shock-absorbing material.

In the specification, the direction in which the plurality of battery cells 10 are stacked may refer to a direction parallel to the Y-axis direction.

The battery assembly 100 may include an accommodating case 20 which forms an accommodating space in which the plurality of battery cells 10 are accommodated. In other words, the plurality of battery cells 10 may be located in the accommodating space.

The accommodating case 20 may include a lower cover 22 supporting the plurality of battery cells 10 and an upper cover 21 which covers the accommodating space in combination with the lower cover 22. Referring to FIG. 2, the lower cover 22 and the upper cover 21 may be coupled to each other to accommodate the plurality of battery cells 10 inside. The lower cover 22 may include an accommodating bottom surface 22a which forms a bottom surface of the accommodating space. The plurality of battery cells 10 may be located on the accommodating bottom surface 22a.

**In** an embodiment, each of the upper cover 21 and the lower cover 22 may include a flange part 21c and 22c. The flange part 21c and 22c may be formed parallel to a bottom surface of each of the upper cover 21 and the lower cover 22. For example, side walls 22b may be formed by extending upward from two edges of the accommodating bottom surface 22a of the lower cover 22. One end of the side wall 22b may be bent to form the flange part 22c. The flange part 22c of the upper cover 21 may also be formed by the method described above.

The upper cover 21 and the lower cover 22 may be easily coupled by the flange part 21c and 22c. A flange part 21c of the upper cover 21 and the flange part 22c of the lower cover 22 may contact each other. The flange part 21c of the upper cover 21 and the flange part 22c of the lower cover 22 may be located facing each other. Along the Z-axis direction, at least a portion of the flange part 21c of the upper cover 21 and at least a portion of the flange part 22c of the lower cover 22 may overlap.

The upper cover 21 and the lower cover 22 may be connected to each other by a fastening member (not shown) penetrating each flange part 21c and 22c.

Without being limited thereto, the upper cover 21 and the lower cover 22 may have various shapes to form the accommodating space inside and may be connected by various coupling methods.

The battery assembly 100 may further include a busbar assembly 40. The busbar assembly 40 may electrically connect the plurality of battery cells 10. The busbar assembly 40 may be located to face the battery cell 10 along the direction in which the tab part 12 protrudes. Referring to FIG. 2, the busbar assembly 40 may be located on each side with the battery cell 10 interposed therebetween.

The battery assembly 100 may further include an end cover 30. The end cover 30 may be coupled with the accommodating case 20 to cover the accommodating space. The end cover 30 may protect the battery cell 10 located in the accommodating space. For this purpose, the end cover 30 may be connected to the accommodating case 20. For example, the end cover 30 and the accommodating case 20 may be connected by welding.

As a result, the battery assembly may include the plurality of battery cells, each including the tab part which is electrically connected to the outside and protrudes outwardly, and the accommodating bottom surface which forms the bottom surface of the accommodating space in which the plurality of battery cells are accommodated.

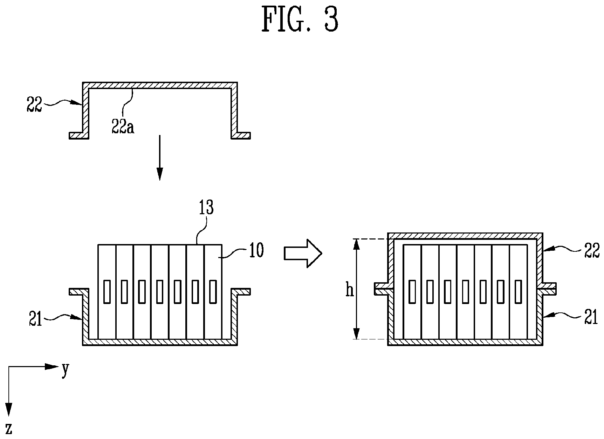

FIG. 3 is a schematic diagram illustrating an assembly process of the accommodating case 20 according to an embodiment of the present disclosure.

The battery assembly 100 further includes an adhesive material 50 (thermal adhesive). The adhesive material 50 may prevent the battery cell 10 from moving inside the accommodating case 20 and transfer heat to the outside.

For this purpose, the adhesive material 50 may use a material with high thermal conductivity. In addition, the adhesive material 50 may use a material with adhesive strength.

The adhesive material 50 may be applied to a pre-selected position and then hardened after a predetermined period of time. Through this, the adhesive material may be easily applied to the accommodating space, and the battery cell and the accommodating case may be easily and stably connected.

In an embodiment, the adhesive material 50 may applied to one surface of the accommodating case and then hardens when the battery cell comes into contact, thereby fixing the accommodating case and the battery cell.

The adhesive materials may include a polyurethane resin. For example, the adhesive material may be a two-component polyurethane adhesive. Without being limited thereto, the adhesive material may use a known product with excellent adhesion performance.

The adhesive material 50 may be located on the lower cover 22. In other words, the adhesive material 50 may be located between the lower cover 22 and the battery cell 10. Through this structure, even if there is an external shock or vibration, the position of the battery cell 10 may be fixed. Further, in case that a material with high thermal conductivity is used, heat generated by the battery cell 10 may be quickly transferred to the outside.

To this end, the battery cell 10 may first be inserted into the upper cover 21. Then, after applying the adhesive material to the lower cover 22, the lower cover 22 may be moved to cover the battery cell 10. The lower cover 22 and the upper cover 21 may be coupled.

Specifically, after positioning the battery cell 10 in the upper cover 21, the upper cover 21 and the battery cell 10 may be placed upside down. The battery cell (10) may be inverted so that one side of the battery cell 10 faces upward, and the one side facing upward may be covered by the lower cover 22. The lower cover 22 and the upper cover 21 may be coupled to form the accommodating space with a height corresponding to a design height (h).

However, when assembling using the lower cover 22 to which the adhesive material 50 is applied, the battery cell 10 may be damaged. When the adhesive material 50 is not applied uniformly and the battery cell 10 shrinks or expands, the exterior material may be damaged. Alternatively, the separator may be bent or the electrode may be bent inside the battery cell 10, which may reduce the performance and stability of the battery cell.

According to an embodiment of the present disclosure, it is possible to assemble the lower cover 22 after applying the adhesive material 50 to one surface of the battery cell 10. More specifically, after measuring a profile of one side of the battery cell 10, the adhesive material 50 may be applied based on the profile.

Referring to FIG. 3, the battery cell 10 may be inverted to be positioned so that a coating surface 13 facing the accommodating bottom surface 22a faces upward. In the specification, the direction toward the accommodating bottom surface 22a may refer to a direction parallel to the Z-axis direction.

The adhesive material 50 may be applied to the coating surface 13. The coating surface 13 may be one surface of the main body 11. After the adhesive material 50 is applied to the coating surface 13, the lower cover 22 may cover the battery cell 10. It may be desirable that the adhesive material 50 be uniformly applied on the coating surface 13.

However, the shape of the coating surface 13 may be irregular and formed unevenly. In other words, in case that the adhesive material 50 is applied without considering the shape of the coating surface 13, the adhesive material 50 may not be applied uniformly.

To this end, the present disclosure may sense a profile regarding the degree of protrusion of the coating surface 13, and control the position of a discharger 300 based on the sensed profile to uniformly apply the adhesive material 50.

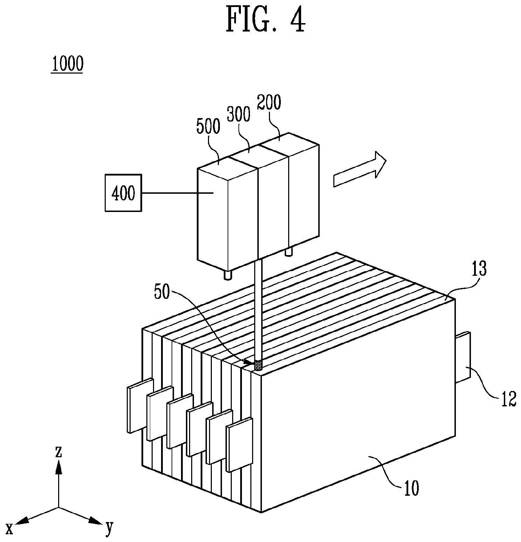

FIG. 4 is a schematic diagram illustrating a process of applying the adhesive material 50 according to an embodiment of the present disclosure.

Referring to FIG. 4, a battery manufacturing apparatus 1000 of the present disclosure includes a sensor 200 configured to sense the profile regarding the degree of protrusion of the coating surface 13 of the battery cell 10 facing the accommodating bottom surface 22a, the discharger 300 configured to discharge the adhesive material 50 to the coating surface 13 of at least one battery cell 10 of the plurality of battery cells 10, and a controller 400 configured to control the discharger 300 or the sensor 200 to adjust the position of the discharger 300 based on the profile.

The sensor 200 may sense the profile regarding the degree of protrusion of the coating surface 13. The profile may refer to information corresponding to the shape of the battery cell 10. The profile may refer to topography of the coating surface 13.

More specifically, the profile may refer to a height from the upper cover 21 to the coating surface 13. The profile may refer to a height of each point of the battery cell 10 along a direction toward the accommodating bottom surface 22a. Unlike this, the upper cover 21 may not be used as a reference point. Sensing the profile may also include sensing a distance from any point, rather than the upper cover 21, to the coating surface 13 along the Z-axis direction, if information about the coating surface 13 can be acquired.

In other words, sensing the profile may mean acquiring information about the shape of each coating surface in order to apply the adhesive material uniformly. Through this, the battery manufacturing apparatus 1000 of the present disclosure may acquire information about the shape of the coating surface 13.

The method of sensing the profile by sensor 200 is not particularly limited. In other words, the sensor 200 may sense the profile through a vision device or a laser device.

When using the laser device, the sensor 200 may include a laser output unit (not shown), a laser recognition unit (not shown), and a data control unit (not shown). The laser output unit may be configured to output a laser. The laser recognition unit may be configured to recognize a laser reflected by an external material. The data control unit may be configured to derive and calculate a profile through logic using the output laser and the recognized laser.

As another example, the sensor 200 may use a 3D scanner. This will allow sensing of the outline, shape or roughness of the battery cell 10. Without limitation, the sensor 200 may use a different configuration capable of sensing the profile.

The sensor 200 may be located above the battery cell 10. The sensor 200 may be located to face the coating surface 13 of the battery cell 10.

The sensor 200 may sense profiles of the plurality of battery cells 10 at the same time. In other words, the sensor 200 may sense the profile of each of the plurality of battery cells 10 sequentially or sense the profiles of all of the plurality of battery cells 10 at the same time.

The sensor 200 may move along a direction in which the tab part 12 protrudes. Through this, it is possible to sense the profile of the coating surface 13 extending from one end to the other end of each battery cell 10.

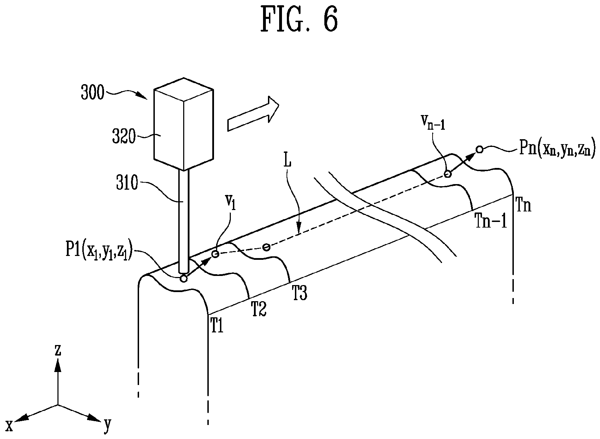

The discharger 300 may discharge the adhesive material 50. The adhesive material 50 may be applied to the coating surface 13 by the discharger 300. For this purpose, the discharger 300 may include a storage (320 of FIG. 6) in which the adhesive material 50 is accommodated and a nozzle (310 of FIG. 6). The nozzle 310 may be located on one side of the storage 320, and the nozzle 310 may be located above the battery cell (10).

In other words, the adhesive material 50 stored in the storage 320 may be discharged through the nozzle 310 and applied to the coating surface 13. Here, an amount of discharge of the adhesive material 50 may be maintained constant. The amount of discharge may not change during the application process, and may be continuously maintained at an initial setting value.

For this purpose, a moving speed of the discharger 300 may be controlled. In case that the amount of discharge is maintained constant, if the discharger 300 moves quickly, an amount of application will decrease, and if the discharger 300 moves slowly, the amount of application will increase. As will be described later, the moving speed of the discharger 300 may be controlled by obtaining an appropriate amount of application based on the profile.

The controller 400 may control the discharger 300 or the sensor 200. The controller 400 may control at least one of the amount of discharge, position, or moving speed of the discharger 300.

Adjusting the position of the discharger 300 may mean determining the position of the discharger 300 along the stacking direction of the battery cells or the protruding direction of the tab part. Adjusting the moving speed of the discharger 300 may mean controlling a direction of travel and a speed of travel of the discharger 300.

Controlling the amount of discharge of the discharger 300 by the controller 400 may mean presetting and changing the amount of adhesive material discharged per hour from the discharger 300. For example, the controller 400 may control the discharger so that the amount of discharge is maintained at a constant value or control the discharger so that the amount of discharge changes.

In addition, the controller 400 may control the position of the sensor 200 or the process of acquiring the profile.

The battery manufacturing apparatus 1000 may further include an inspector 500. The inspector 500 may sense the adhesive material 50 applied by the discharger 300. The inspector 500 may acquire a profile regarding the degree of protrusion of the adhesive material 50. Through this, the inspector 500 may inspect whether the adhesive material 50 is applied uniformly.

In an embodiment, the inspector 500 may be the same component as the sensor 200. The sensor 200 may sense the profile regarding the degree of protrusion of the coating surface 13, and the sensor 200 may also sense the applied adhesive material 50.

In another embodiment, the sensor 200, the discharger 300, and the inspector 500 may be separate components. In other words, the sensor 200 and the discharger 300 may move separately. After the sensor 200 senses the profile, the discharger 300 may move to apply the adhesive material 50.

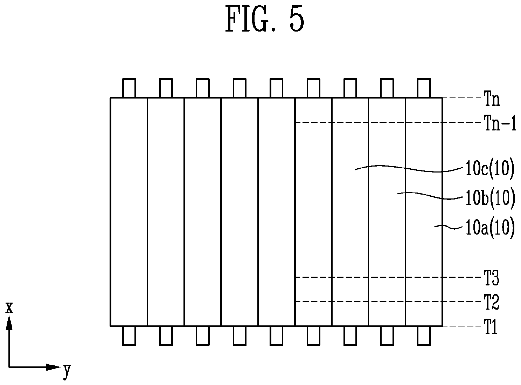

FIG. 5 illustrates one or more sensing lines according to an embodiment of the present disclosure.

The sensor 200 may sense the profile of at least one battery cell 10 of the plurality of battery cells 10. The sensor 200 may sense the profile in one or more sensing lines of the battery cell 10 located along the protruding direction of the tab part 12. In other words, one or more sensing lines may be located spaced apart from each other along the protruding direction of the tab part, and the sensor 200 may sense the profile in each sensing line.

In other words, the sensor 200 may divide the battery cell 10 into a plurality of sensing lines along the X-axis direction, and then may sense the profile in each sensing line. The number of sensing lines may be set by a user. There may be one sensing line or two or more sensing lines. The sensing line may refer to any area virtually set for measurement rather than an area actually displayed on the battery cell 10.

As the number of sensing lines increases, the number of profiles may also increase. As the number of profiles increases, the similarity with the actual shape of the battery cell 10 may increase, and the adhesive material 50 may be applied appropriately.

Spacing between one or more sensing lines may be formed to be equal to each other. In other words, the battery cell 10 may be divided and sensed at equal intervals.

Referring to FIG. 5, the battery cell 10 may be divided at equal intervals along the protruding direction of the tab part 12. The sensor 200 may sense profiles from a sensing line T1 located at one side to a sensing line Tn located at the other side along the protruding direction of the tab part 12, respectively. Each spacing between sensing lines may be formed equally.

In an embodiment, the sensor 200 may sense the profiles of multiple battery cells 10 at the same time. The sensor 200 may simultaneously sense the profiles of the battery cells 10 adjacent along the stacking direction of the battery cells 10. Referring to FIG. 5, the sensor 200 may simultaneously sense the profiles of three adjacent battery cells 10a, 10b, and 10c.

FIG. 6 illustrates a movement path of the discharger 300 according to an embodiment of the present disclosure.

The controller 400 may control the discharger 300 or the sensor 200 to adjust the position of the discharger 300 based on the profile. In other words, based on the sensed profile, the discharger 300 may discharge the adhesive material 50. The discharger 300 may move along the protruding direction of the tab part 12 to apply the adhesive material 50 to the coating surface 13.

As described above, the discharger 300 may include the storage 320 and the nozzle 310. The adhesive material 50 stored in the storage 320 may be discharged through the nozzle 310.

Referring to FIG. 6, based on the profile acquired by the sensor 200, the position of the discharger 300 along the stacking direction of the battery cells, the protruding direction of the tab part, or the direction toward the accommodating bottom surface may be controlled. In other words, the discharger 300 may move along the protruding direction of the tab part 12, and while moving, the position may be controlled along the stacking direction of the battery cells and the direction toward the accommodating bottom surface.

For this purpose, the controller 400 may obtain each reference point at which the discharger 300 is located based on each profile in one or more sensing lines.

The controller 400 may obtain each reference point (P1, Pn) along the stacking direction of the battery cells 10 based on each profile in one or more sensing lines. More specifically, the controller 400 may obtain the coordinates of the reference points (P1, Pn).

The controller 400 may obtain a movement path (L) of the discharger 300 based on the obtained coordinates. Here, the coordinate of the reference point may refer to the coordinate of at least one of the stacking direction of the battery cells 10, the protruding direction of the tab part 12, or the direction toward the accommodating bottom surface 22a.

For example, the controller 400 may obtain the coordinates of the reference point along the stacking direction (e.g., the Y-axis direction) of the battery cells 10 or the coordinates of the reference point along the protruding direction (e.g., the X-axis direction) of the tab part 12.

The controller 400 may obtain the movement path of the discharger 300 through interpolation or extrapolation based on each reference point. In other words, the controller 400 may acquire the reference point through the profile, and based on the reference point, an appropriate movement path of the discharger 300 may be obtained.

Therefore, as the number of sensing lines increases, the number of reference points may increase, and the movement path of the discharger 300 may be finely adjusted.

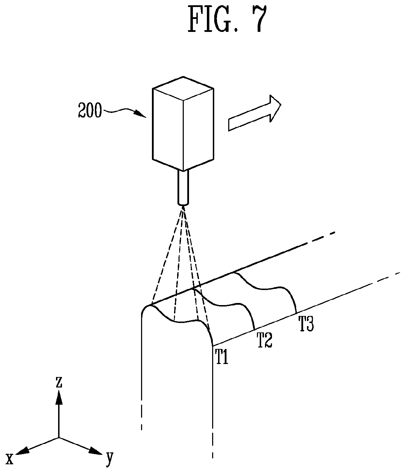

FIG. 7 illustrates the sensor 200 sensing a profile according to an embodiment of the present disclosure.

The sensor 200 may sense the profile of each battery cell 10 along the protruding direction of the tab part 12. For example, the sensor 200 may use a laser device. Here, the type and intensity of the laser are not particularly limited and may be used as appropriate for acquisition of the profile.

The sensor 200 may be movable. Although not shown in the drawing, the sensor 200 may be moved by being connected to a transport rail. In addition, the sensor 200 may move freely in all directions, including the X-axis, Y-axis, and Z-axis, and the direction of movement is not restricted. By sensing the profile by the sensor 200, the width, height, or roughness of the coating surface 13 of each battery cell 10 may be acquired.

The sensor 200 may repeat moving and stopping at regular intervals. The sensor 200 may be located on each of one or more sensing lines and may sense the profile.

Referring to FIG. 7, the sensor 200 may move to sense the profile of a second sensing line T2 after sensing the profile of the first sensing line T1. After the sensor 200 moves to the second sensing line T2, the sensor 200 may stop moving and sense the profile.

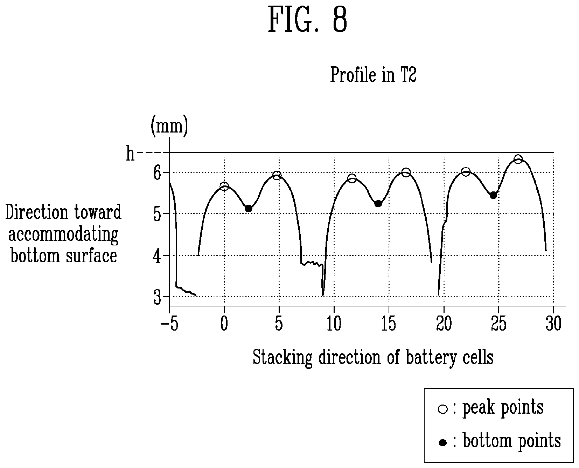

FIG. 8 illustrates the profile according to an embodiment of the present disclosure. Specifically, FIG. 8 illustrates the profile sensed in the second sensing line T2.

As described above, the sensor 200 may simultaneously sense the profiles of a plurality of the battery cells 10. Referring to FIG. 8, the profiles of three adjacent battery cells 10 may be sensed and checked at the same time.

The horizontal axis may refer to the direction along the stacking direction of the battery cells 10, and the vertical axis may refer to the direction toward the accommodating bottom surface 22a. Referring to FIG. 8, the degree of protrusion of the coating surface 13 may be determined along the direction toward the accommodating bottom surface 22a. The profile may have two peak points (a, b) and one bottom point (c) along the direction toward the accommodating bottom surface 22a.

The two peak points (a, b) may each refer to a convexly raised point along the direction toward the accommodating bottom surface 22a, and the one bottom point (c) may refer to a point depressed in the direction where the main body 11 is located.

The controller 400 may obtain the coordinates of each reference point along the stacking direction (e.g., the Y-axis direction) of the plurality of battery cells 10 based on each profile in one or more sensing lines.

In other words, the controller 400 may select an arbitrary point on the profile according to a predetermined logic and obtain the coordinates of the reference point based on this. For example, the controller 400 may select any point on the profile and set any point as a reference point. Alternatively, the controller 400 may select a plurality of points on the profile and obtain the coordinates of the reference point based on them.

The controller 400 may obtain the coordinates of each reference point based on inflection points on the profile. The inflection point may be a point on the profile which protrudes or is depressed. The inflection point may refer to a point on the profile where the slope is zero. For example, the inflection point may refer to a peak point or a bottom point.

Referring to FIG. 8, the controller 400 may obtain the coordinates of the reference point based on the two peak points (a, b). In another embodiment, the coordinates of the reference point may be obtained based on the bottom point (c).

The controller 400 may obtain the coordinates of the reference point along the stacking direction of the battery cells 10 through the following battery cell stacking direction coordinate calculation equation.

### < Battery cell stacking direction coordinate calculation equation >

X = (a + b)/2. (Here, X is the coordinate of the reference point along the stacking direction of the battery cells, and a and b may be the coordinates of the peak point of any one profile.)

The controller 400 may obtain the midpoint of the two peak points as the coordinates of the discharger 300 through the battery cell stacking direction coordinate calculation equation. In other words, the coordinates of the discharger 300 in any one sensing line along the stacking direction of the battery cells 10 may be obtained by average coordinates of the two peak points. Through this, the adhesive material 50 applied does not deviate to the outside, and may be stably applied.

In each sensing line, the coordinates of the reference point along the stacking direction of the battery cells 10 may be obtained. In other words, it is possible to obtain the coordinates of the reference point based on the profile measured at the first sensing line T1 and the coordinates of the reference point based on the profile measured at the second sensing line T2.

Further, the controller 400 may obtain a virtual application area (K) between each battery cell 10 and the accommodating bottom surface 22a based on the profile measured in one or more sensing lines.

By obtaining the virtual application area (K), an appropriate amount of the adhesive material 50 may be applied. If the adhesive material 50 is discharged excessively compared to the virtual application area, the adhesive material 50 may flow between the battery cells 10, and if the adhesive material 50 is discharged insufficiently, the proper performance of the adhesive material 50 may not be achieved.

The virtual application area (K) may refer to the area from the lower cover 22 to the coating surface 13 when the upper cover 21 and the lower cover 22 are assembled. In other words, it may be desirable for the adhesive material 50 to be applied evenly before the lower cover 22 is assembled and formed to a height corresponding to the design height (h).

For example, the controller 400 may obtain the virtual application area (K) with the bottom point as the boundary. Referring to FIG. 8 again, the area between the design height and the coating surface 13 in the range between the peak points (a, b) may be obtained as the virtual application area (K). Mensuration by parts may be used to obtain the virtual application area, but the present disclosure is not limited thereto.

The controller 400 may obtain the coordinates of the reference point along the protruding direction of the tab part 12. The controller 400 may obtain the coordinates of the reference point along the protruding direction of the tab part based on the position of one or more sensing lines.

In other words, the coordinates of the reference point may be obtained based on the coordinates of the sensing line along the protruding direction of the tab part. The controller 400 may obtain the coordinates of the reference point based on the sensing line according to the predetermined logic. The controller 400 may obtain each of the one or more sensing lines as the coordinates of the reference point according to the protruding direction of the tab part.

Referring to FIG. 6 again, the controller 400 may obtain the coordinates of each sensing line (T1, T2, T3, TN) as the coordinates of each reference point.

Finally, after the sensor 200 senses the profile in the first sensing line T1, the controller 400 may obtain the coordinates of the reference point along the stacking direction of the battery cells 10 and the coordinates of the reference point along the protruding direction of the tab part 12 based on the profile. Similarly, the coordinates of the reference point in the second sensing line T2 may be obtained, and sequentially, the coordinates of the reference point in the last sensing line Tn may be obtained.

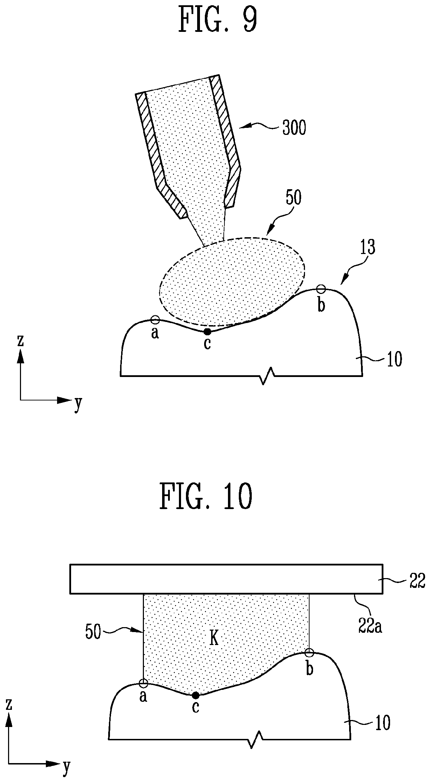

FIG. 9 illustrates the adhesive material 50 being applied to the battery cell 10 according to an embodiment of the present disclosure.

Referring to FIG. 9, the discharger 300 may apply the adhesive material 50 to an upper portion of the coating surface 13. If the discharger 300 is too far away from the battery cell 10 in the direction toward the accommodating bottom surface 22a, the discharged adhesive material 50 may be scattered. Conversely, if the discharger 300 is located too close to the battery cell 10, the adhesive material 50 may not be discharged smoothly, and the adhesive material 50 may flow back to the nozzle 310. Therefore, it may be important that the discharger 300 is formed at an appropriate height along the direction toward the accommodating bottom surface 22a.

The controller 400 may obtain the coordinates of the reference point along the direction toward the accommodating bottom surface based on each profile in one or more sensing lines.

### < Coordinate calculation equation in direction toward accommodating bottom surface >

Z = α*K^β (where Z is the coordinate of the reference point along the direction toward the accommodating bottom surface, K may refer to the virtual application area, α>0, and β>0.)

Eventually, the controller 400 may obtain the coordinates of each reference point in one or more sensing lines. For example, starting from the first sensing line, the coordinates of the reference point may be obtained sequentially in the last n-th sensing line. By interpolating each reference point, the movement path of the discharger 300 may be obtained.

If the first sensing line is located at one end of the battery cell 10 and the n-th sensing line is located at the other end of the battery cell 10, the entire area of the battery cell 10 may be covered, so that the path may be obtained by interpolation.

In another embodiment, when each sensing line is located on the inner side of the coating surface 13 of the battery cell 10, it may not be possible to cover the entire coating surface 13. Here, in areas beyond the range of the sensing line, the path may be obtained by extrapolation.

FIG. 10 illustrates a part of the assembled lower cover according to an embodiment of the present disclosure.

The adhesive material 50 needs to be applied to the coating surface 13 in an appropriate amount. When the amount of application increases, the adhesive material 50 may move to both sides and cause damage to the battery cell 10. In addition, if the amount applied is small, the performance of the adhesive material 50 may not be achieved. Referring to FIG. 10, it is necessary to apply an appropriate amount of the adhesive material 50 so that the adhesive material 50 is located on the coating surface 13 when the lower cover 22 is assembled.

For this purpose, the controller 400 may control the moving speed of the discharger 300 based on the virtual application area. The speed at which the adhesive material 50 is discharged from the discharger 300 may be maintained constantly. The discharger 300 may discharge a mixture of different types of fluids. For example, the discharger 300 may be a two-component dispenser.

Since the speed at which the adhesive material 50 is discharged is maintained constant, it is necessary to control the moving speed of the discharger 300 to adjust the amount of application. If the discharger 300 moves quickly, the discharge amount will be small, and if the discharger 300 moves slowly, the discharge amount will be large.

The controller 400 may control the moving speed of the discharger 300 based on the virtual application area and the discharge speed of the adhesive material 50. The controller 400 may obtain the moving speed of the discharger 300 by the following moving speed equation.

### < Moving speed equation >

V = Q/A (where V refers to the moving speed (mm/s) of the discharger 300, Q refers to the amount of discharge per hour (mm³/s) of the discharger 300, and A refers to the virtual application area (mm²) on which the adhesive material 50 is applied.)

In other words, since the hourly discharge amount of the discharger 300 is maintained constant, if the virtual application area is small, the discharger 300 will move quickly, and if the virtual application area is large, the discharger 300 will move slowly.

The virtual application area may be measured at the sensing line. The controller 400 may control the moving speed of the discharger 300 based on the virtual application area measured at any one sensing line. Alternatively, the controller 400 may control the moving speed of the discharger 300 based on the virtual application area measured at each sensing line.

The moving speed of the discharger 300 within each section between one or more sensing lines may be maintained constant. In other words, since the virtual application area is measured at each sensing line positioned spaced apart along the protruding direction of the tab part 12, the moving speed of the discharger 300 may change when the discharger 300 passes through each sensing line.

Referring to FIG. 6 again, from the first sensing line T1 to the second sensing line T2, the discharger 300 may move at a first velocity v1, and from an n-1 sensing line (Tn-1) to the n-th sensing line Tn, the discharger 300 may move at an n-1 velocity (Vn-1). Additionally, the speed of the discharger 300 may change as it passes each sensing line.

In another embodiment, the moving speed of the discharger 300 may be obtained by acquiring a value by averaging the virtual application area measured at each sensing line. Here, the discharger 300 may move at the same speed throughout the entire section. In other words, the first velocity and the n-th speed may be equal.

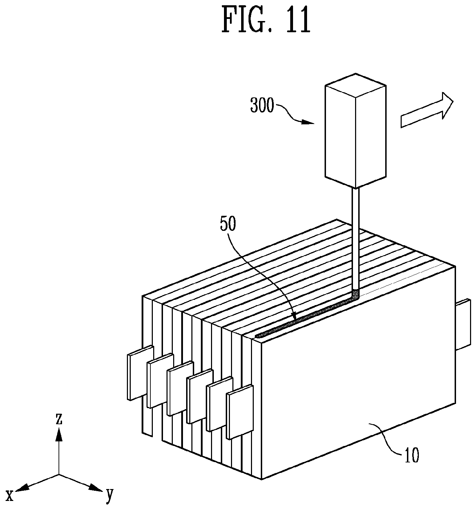

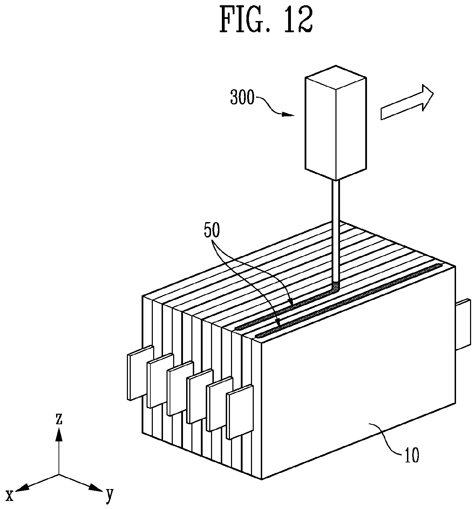

FIG. 11 and FIG. 12 illustrate the discharger 300 applying the adhesive material 50 according to an embodiment of the present disclosure.

Referring to FIGS. 11 and 12, the discharger 300 moves along one direction and the adhesive material 50 may be applied to the coating surface 13. The discharger 300 may move reciprocally along the protruding direction of the tab part 12.

The controller 400 may obtain the movement path or the moving speed of the discharger 300 based on the sensed profile. Based on the obtained movement path or moving speed, the controller 400 may control the discharger 300 to apply the adhesive material 50.

The discharger 300 may move along the protruding direction of the tab part 12 and discharge the adhesive material 50. In other words, the discharger 300 may move at a preset speed, and at the same time, the adhesive material 50 may be discharged from the nozzle 310. Through this, the adhesive material 50 may be applied uniformly.

Referring to FIG. 12, after application is completed on the coating surface 13 of one battery cell 10, application may be performed on the coating surface 13 of another battery cell 10. The controller 400 may control the discharger 300 to sequentially coat each battery cell 10. In the following, a battery manufacturing method will be described.

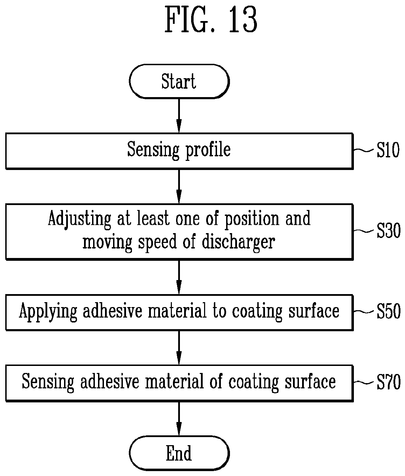

FIG. 13 illustrates a battery manufacturing method according to an embodiment of the present disclosure.

Referring to FIG. 13, a battery manufacturing method of an embodiment of the present disclosure includes sensing a profile of the degree of protrusion of the coating surface 13 toward the accommodating bottom surface 22a for each battery cell 10 (S10), adjusting at least one of the position and moving speed of the discharger 300 for applying adhesive to the coating surface 13 of a plurality of battery cells 10 based on the profile (S30), and applying the adhesive material 50 to the coating surface 13 of at least one battery cell 10 of the plurality of battery cells 10 (S50).

According to the manufacturing method of the present disclosure, in the step of sensing the profile (S10), each profile may be sensed in one or more sensing lines along the protruding direction of the tab part 12. The controller 400 may sense each profile in one or more sensing lines.

Thereafter, the manufacturing method of the present disclosure may perform the step of adjusting at least one of the position and the moving speed of the discharger 300 which applies the adhesive to the coating surface 13 of the plurality of battery cells 10 (S30) based on the profile. Thereafter, the manufacturing method of the present disclosure may perform the step of applying the adhesive material 50 to the coating surface 13 of at least one of the battery cells 10 among the plurality of battery cells 10 (S50).

In an embodiment, the manufacturing method of the present disclosure may simultaneously sense the profiles of a plurality of battery cells 10. This reduces the time required for the manufacturing process.

In another embodiment, the manufacturing method of the present disclosure may sense the profile of the battery cell 10 of any one of the plurality of battery cells 10 and apply the adhesive material 50, and then sense the profile of another battery cell 10 and apply the adhesive material 50.

In other words, the battery manufacturing method of the present disclosure is not limited to the step of sensing (S10) and the step of application (S50) being carried out simultaneously in any one battery cell 10.

Consequently, the manufacturing method of the present disclosure may apply the adhesive material 50 by sensing the profile to adjust the position of the discharger 300 and applying the adhesive material 50, thereby reflecting the change according to the shape of the coating surface 13 of the battery cell 10.

According to the manufacturing method of the present disclosure, in the step of applying the adhesive material 50, the discharger 300 may move and discharge the adhesive material 50. The discharger 300 may move and discharge the adhesive material 50 to prevent the coating material from clumping at a specific area.

The manufacturing method of the present disclosure may further include sensing the distance between the adhesive material 50 applied to the coating surface 13 among the plurality of battery cells 10 and the accommodating bottom surface 22a (S70). Through this, it is possible to check whether the adhesive material 50 is applied uniformly.

Some of the aspects of the present disclosure are as follows:
Aspect 1: A battery manufacturing apparatus (1000) for manufacturing a battery assembly which comprises a plurality of battery cells (10), each battery cell (10) comprising a tab part (12) electrically connected to an outside and protruding outward, and an accommodating bottom surface (22a) which forms a bottom surface of an accommodating space in which the plurality of battery cells (10) are accommodated, the battery manufacturing apparatus (1000) comprising:
   a sensor (200) configured to sense a profile regarding a degree of protrusion of a coating surface (13) of one side of the battery cell (10) facing the accommodating bottom surface (22a);
   a discharger (300) configured to discharge an adhesive material (50) to the coating surface (13) of at least one battery cell (10) of the plurality of battery cells (10); and
   a controller (400) configured to control the discharger (300) or the sensor (200) to adjust at least one of a position and a moving speed of the discharger (300) based on the profile.
Aspect 2: The battery manufacturing apparatus (1000) according to aspect 1, wherein the sensor (200) is configured to sense the profile in one or more sensing lines located along a protruding direction of the tab part (12) of at least one battery cell (10) of the plurality of battery cells (10),
   preferably, wherein spacing between the one or more sensing lines is formed to be equal to each other.
Aspect 3: The battery manufacturing apparatus (1000) according to aspect 2, wherein the controller (400) is configured to obtain each reference point where the discharger (300) is located based on each profile in the one or more sensing lines.
Aspect 4: The battery manufacturing apparatus (1000) according to aspect 3, wherein the controller (400) is configured to obtain a movement path (L) of the discharger (300) through interpolation or extrapolation based on the reference point.
Aspect 5: The battery manufacturing apparatus (1000) according to aspect 3, wherein the controller (400) is configured to obtain coordinates of the reference point along a stacking direction of the plurality of battery cells (10) based on each profile in the one or more sensing lines,
   optionally, wherein the controller (400) is configured to obtain coordinates of the reference point along the protruding direction of the tab part (12) based on a position of the one or more sensing lines.
Aspect 6: The battery manufacturing apparatus (1000) according to aspect 5, wherein the controller (400) is configured to obtain the coordinates of the reference point based on an inflection point on the profile.
Aspect 7: The battery manufacturing apparatus (1000) according to aspect 1, wherein the discharger (300) is configured to move along a protruding direction of the tab part (12) and discharge the adhesive material (50).
Aspect 8: The battery manufacturing apparatus (1000) according to aspect 5, wherein the controller (400) is configured to obtain each of the one or more sensing lines as the coordinates of the reference point along the protruding direction of the tab part (12).
Aspect 9: The battery manufacturing apparatus (1000) according to aspect 2 or 3, wherein the controller (400) is configured to obtain a virtual application area between the battery cell (10) and the accommodating bottom surface (22a) based on the profile measured in the one or more sensing lines.
Aspect 10: The battery manufacturing apparatus (1000) according to aspect 9, wherein the controller (400) is configured to control the moving speed of the discharger (300) based on the virtual application area.
Aspect 11: The battery manufacturing apparatus (1000) according to aspect 10, wherein the controller (400) is configured to obtain the moving speed of the discharger (300) through the following Equation 1: V = Q/A (where V refers to the moving speed of the discharger (300), Q refers to an hourly discharge amount of the discharger (300), and A refers to the virtual application area on which the adhesive material (50) is applied). optionally, wherein the moving speed of the discharger (300) is maintained the same within each section between the one or more sensing lines.
Aspect 12: A battery manufacturing method of manufacturing a battery assembly which comprises a plurality of battery cells (10), each battery cell (10) comprising a tab part (12) electrically connected to an outside and protruding outward, and an accommodating bottom surface (22a) which forms a bottom surface of an accommodating space in which the plurality of battery cells (10) are accommodated, the battery manufacturing method comprising:
   sensing (S10) a profile regarding a degree of protrusion of a coating surface (13) of one side of the battery cell (10) facing the accommodating bottom surface (22a);
   adjusting (S30) at least one of a position and a moving speed of a discharger (300) configured to apply adhesive to the coating surface (13) of the battery cell (10) based on the profile; and
   applying (S50) an adhesive material (50) to the coating surface (13) of at least one battery cell (10) of the plurality of battery cells (10).
Aspect 13: The battery manufacturing method according to aspect 12, wherein the sensing (S10) of the profile comprises sensing the profile in each of one or more sensing lines along a protruding direction of the tab part (12).
Aspect 14: The battery manufacturing method according to aspect 12 or 13, wherein the applying (S50) of the adhesive material (50) comprises discharging the adhesive material (50) by the discharger (300) while the discharger (300) moves.
Aspect 15: The battery manufacturing method according to any one of aspects 12 to 14, further comprising sensing (S70) a distance between the adhesive material (50) applied to the coating surface (13) of the plurality of battery cells (10) and the accommodating bottom surface (22a).

The present disclosure may be embodied in various forms, and the scope of the right is not limited to the above-described embodiments. The above description is merely an example of applying the principles of the present disclosure, and other configurations may be further included without departing from the scope of the present disclosure.

## Claims

1. A battery manufacturing apparatus (1000) for manufacturing a battery assembly which comprises a plurality of battery cells (10), each battery cell (10) comprising a tab part (12) electrically connected to an outside and protruding outward, and an accommodating bottom surface (22a) which forms a bottom surface of an accommodating space in which the plurality of battery cells (10) are accommodated, the battery manufacturing apparatus (1000) comprising:
a sensor (200) configured to sense a profile regarding a degree of protrusion of a coating surface (13) of one side of the battery cell (10) facing the accommodating bottom surface (22a);
a discharger (300) configured to discharge an adhesive material (50) to the coating surface (13) of at least one battery cell (10) of the plurality of battery cells (10); and
a controller (400) configured to control the discharger (300) or the sensor (200) to adjust at least one of a position and a moving speed of the discharger (300) based on the profile.

2. The battery manufacturing apparatus (1000) according to claim 1, wherein the sensor (200) is configured to sense the profile in one or more sensing lines located along a protruding direction of the tab part (12) of at least one battery cell (10) of the plurality of battery cells (10),
preferably, wherein spacing between the one or more sensing lines is formed to be equal to each other.

3. The battery manufacturing apparatus (1000) according to claim 2, wherein the controller (400) is configured to obtain each reference point where the discharger (300) is located based on each profile in the one or more sensing lines.

4. The battery manufacturing apparatus (1000) according to claim 3, wherein the controller (400) is configured to obtain a movement path (L) of the discharger (300) through interpolation or extrapolation based on the reference point.

5. The battery manufacturing apparatus (1000) according to claim 3, wherein the controller (400) is configured to obtain coordinates of the reference point along a stacking direction of the plurality of battery cells (10) based on each profile in the one or more sensing lines,
optionally, wherein the controller (400) is configured to obtain coordinates of the reference point along the protruding direction of the tab part (12) based on a position of the one or more sensing lines.

6. The battery manufacturing apparatus (1000) according to claim 5, wherein the controller (400) is configured to obtain the coordinates of the reference point based on an inflection point on the profile.

7. The battery manufacturing apparatus (1000) according to claim 1, wherein the discharger (300) is configured to move along a protruding direction of the tab part (12) and discharge the adhesive material (50).

8. The battery manufacturing apparatus (1000) according to claim 5, wherein the controller (400) is configured to obtain each of the one or more sensing lines as the coordinates of the reference point along the protruding direction of the tab part (12).

9. The battery manufacturing apparatus (1000) according to claim 2 or 3, wherein the controller (400) is configured to obtain a virtual application area between the battery cell (10) and the accommodating bottom surface (22a) based on the profile measured in the one or more sensing lines.

10. The battery manufacturing apparatus (1000) according to claim 9, wherein the controller (400) is configured to control the moving speed of the discharger (300) based on the virtual application area.

11. The battery manufacturing apparatus (1000) according to claim 10, wherein the controller (400) is configured to obtain the moving speed of the discharger (300) through the following Equation 1:V = Q/A (where V refers to the moving speed of the discharger (300), Q refers to an hourly discharge amount of the discharger (300), and A refers to the virtual application area on which the adhesive material (50) is applied). optionally, wherein the moving speed of the discharger (300) is maintained the same within each section between the one or more sensing lines.

12. A battery manufacturing method of manufacturing a battery assembly which comprises a plurality of battery cells (10), each battery cell (10) comprising a tab part (12) electrically connected to an outside and protruding outward, and an accommodating bottom surface (22a) which forms a bottom surface of an accommodating space in which the plurality of battery cells (10) are accommodated, the battery manufacturing method comprising:
sensing (S10) a profile regarding a degree of protrusion of a coating surface (13) of one side of the battery cell (10) facing the accommodating bottom surface (22a);
adjusting (S30) at least one of a position and a moving speed of a discharger (300) configured to apply adhesive to the coating surface (13) of the battery cell (10) based on the profile; and
applying (S50) an adhesive material (50) to the coating surface (13) of at least one battery cell (10) of the plurality of battery cells (10).

13. The battery manufacturing method according to claim 12, wherein the sensing (S10) of the profile comprises sensing the profile in each of one or more sensing lines along a protruding direction of the tab part (12).

14. The battery manufacturing method according to claim 12 or 13, wherein the applying (S50) of the adhesive material (50) comprises discharging the adhesive material (50) by the discharger (300) while the discharger (300) moves.

15. The battery manufacturing method according to any one of claims 12 to 14, further comprising sensing (S70) a distance between the adhesive material (50) applied to the coating surface (13) of the plurality of battery cells (10) and the accommodating bottom surface (22a).
